# EUROPEAN PATENT APPLICATION

(11) **EP 4 614 765 A1**
(43) Date of publication of application: **10.09.2025**
(21) Application number: 24161776.0
(22) Date of filing: 06.03.2024
(51) Int. Cl.: H02K 1/20, H02K 3/24, H02K 9/197, H02K 5/128, H02K 3/487

(54) **E-MACHINE SYSTEM WITH STATOR MEMBER HAVING RADIAL SEAL MEMBER FOR DIRECTLY-COOLED WINDING SLOTS**

(71) Applicant: Garrett Transportation I Inc., Torrance, CA 90504 (US)
(72) Inventor: Yang, Tsu-Ang, Brno (CZ)
(74) Representative: Ingrassia, Fisher & Lorenz UK Ltd.

(57) **Abstract**

A e-machine includes a stator member having a longitudinal axis, a first axial end, and a second axial end. The stator member includes a core that supports a plurality of windings. The core includes an inner radial area that extends along the longitudinal axis between the first axial end and the second axial end. The core includes a slot extending between the first axial end and the second axial end. The slot is configured to receive a stator winding segment of the plurality of windings. The e-machine also includes a radial seal member attached to the core. The radial seal member seals off the slot on the inner radial area. Furthermore, the e-machine includes a flow channel cooperatively defined by the radial seal member and the slot of the core. The flow channel is configured to receive a flow of coolant for cooling the stator winding segment.

## Description

### TECHNICAL FIELD

The technical field generally relates to an e-machine and, more particularly, to an e-machine with a stator member having a radial seal member for directly cooled winding slots.

### BACKGROUND

E-machines, such as electric motors, electric generators, and combination motor/generators, are provided for a variety of uses. For example, electric traction motors are proposed for electric vehicles, locomotives, and the like.

Some e-machines may generate heat during operation, may operate in high-temperature environments, etc. Elevated temperatures may hinder performance and/or cause other disadvantages. Thus, e-machine systems are proposed that include features configured to cool the e-machine. However, providing such cooling features remains challenging. There may be detrimental increases in costs, part count, device complexity, size, bulkiness, and/or weight if these cooling features are included.

Thus, there remains a need for an e-machine system that provides effective cooling. There remains a need for an e-machine system, wherein the cooling features are provided in an e-machine that is relatively compact and low-weight. There is also a need for such an e-machine that has high manufacturing efficiency for reduced costs and manufacturing time. Other desirable features and characteristics will become apparent from the subsequent detailed description and the appended claims, taken in conjunction with the accompanying drawings and this background.

### BRIEF SUMMARY

In an example embodiment, an e-machine is disclosed that includes a stator member having a longitudinal axis. The stator member includes a first axial end and a second axial end that are spaced apart along the longitudinal axis. The stator member includes a core that supports a plurality of windings. The core includes an inner radial area that extends along the longitudinal axis between the first axial end and the second axial end. The core includes a slot extending between the first axial end and the second axial end. The slot is configured to receive a stator winding segment of the plurality of windings. The e-machine also includes a radial seal member attached to the core. The radial seal member seals off the slot on the inner radial area. Furthermore, the e-machine includes a flow channel cooperatively defined by the radial seal member and the slot of the core. The flow channel is configured to receive a flow of coolant for cooling the stator winding segment.

In some embodiments, the radial seal member is cylindrical and hollow and includes a seal member first axial end that projects along the longitudinal axis from the first axial end of the core.

Also, in some embodiments, the radial seal member includes a seal member second axial end that projects along the longitudinal axis from the second axial end of the core.

Additionally, in some embodiments, the e-machine includes a housing that houses the stator member. The housing, the seal member first axial end, and the first axial end of the core cooperatively define a flow chamber. The flow chamber is fluidly connected to the slot.

Furthermore, in some embodiments, the e-machine includes a housing that houses the stator member. The housing includes an interior support that engages and supports the seal member first axial end.

In some embodiments, the core is cooperatively defined by a plurality of core laminations that are stacked along the longitudinal axis.

Also, in some embodiments, the core is cooperatively defined by a plurality of core elements extending partially about the axis and arranged together about the axis.

Moreover, in some embodiments, the radial seal member is cooperatively defined by a plurality of seal member segments extending partially about the axis and arranged together about the axis.

Also, in some embodiments, the core includes a plurality of teeth. The e-machine also includes a plurality of tooth members that are attached to the radial seal member. At least one of the plurality of tooth members is engaged with a corresponding one of the plurality of teeth to limit rotation of the core relative to the radial seal member.

Furthermore, in some embodiments, the at least one of the plurality of tooth members includes a projection that projects outward radially from the axis and the corresponding one of the plurality of teeth includes a recess that receives the projection to limit rotation of the core relative to the radial seal member.

In some embodiments, a method of manufacturing the e-machine is disclosed, including attaching at least part of the radial seal member to at least part of the core.

Additionally, in some embodiments, an e-machine system comprising the e-machine is disclosed, and the e-machine is an electric motor.

### BRIEF DESCRIPTION OF DRAWINGS

The various embodiments will hereinafter be described in conjunction with the following drawing figures, wherein like numerals denote like elements, and wherein:
FIG. 1 is a schematic illustration of an e-machine system according to example embodiments of the present disclosure;
FIG. 2 is a longitudinal cross-sectional view of an e-machine of the e-machine system of FIG. 1 according to example embodiments of the present disclosure;
FIG. 3 is an axial cross-sectional view of a stator member and housing of the e-machine of FIG. 2;
FIG. 4 is an isometric view of a core member of the stator member of FIG. 3 according to example embodiments;
FIG. 5 is a schematic view of a radial seal member and the core member of FIG. 4 shown during a manufacturing method according to example embodiments;
FIG. 6 is an isometric view of a core and radial seal member of the e-machine of FIG. 2 according to example embodiments;
FIG. 7 is an isometric view of a plurality of tooth members of the e-machine of FIG. 1 according to example embodiments;
FIG. 8 is an isometric view of ends of the plurality of tooth members of FIG. 7;
FIG. 9 is an isometric view of a segment of the radial seal member and the plurality of tooth members of FIG. 7 according to example embodiments;
FIG. 10 is an isometric view of the radial seal member with the plurality of tooth members of FIG. 7;
FIG. 11 is an axial cross section of the core and radial seal member of the e-machine of FIG. 1 according to additional embodiments;
FIG. 12 is an isometric view of the core and radial seal member of the e-machine of FIG. 1 according to additional embodiments;
FIG. 13 is an isometric view of the radial seal member with the plurality of tooth members of FIG. 7 according to additional embodiments; and
FIG. 14 is an isometric view of the core and radial seal member of the e-machine of FIG. 1 according to additional embodiments.

### DETAILED DESCRIPTION

The following Detailed Description is merely exemplary in nature and is not intended to limit the various embodiments or the application and uses thereof. Furthermore, there is no intention to be bound by any theory presented in the preceding background or the following detailed description.

Broadly, example embodiments disclosed herein include an e-machine, such as an electric motor, with a stator member. The stator member may include a core (i.e., core member) that may be defined by a plurality of laminations that are stacked along a longitudinal axis. The core may include a plurality of teeth that radiate about the axis and that are open on an inner radial area of the core. Accordingly, slots may be defined respectively between neighboring pairs of the teeth. The slots may extend longitudinally along the longitudinal axis between axial ends of the core. The core may support stator windings within the slots. Furthermore, the stator member may include a radial seal member that is sealed to the core and that extends across radial ends of neighboring teeth. Accordingly, the radial seal member may seal off one or more slots of the core, for example, on the inner radial area of the core. The radial seal member and the slots of the core may cooperatively define flow passages for the stator member. Fluid coolant may flow between the axial ends of the stator member via the flow passages. The coolant may flow along the stator windings within the slots to provide cooling thereto. As such, the e-machine may be cooled effectively and efficiently. Also, these features may be provided in a compact, lightweight package that is simple to manufacture and assemble.

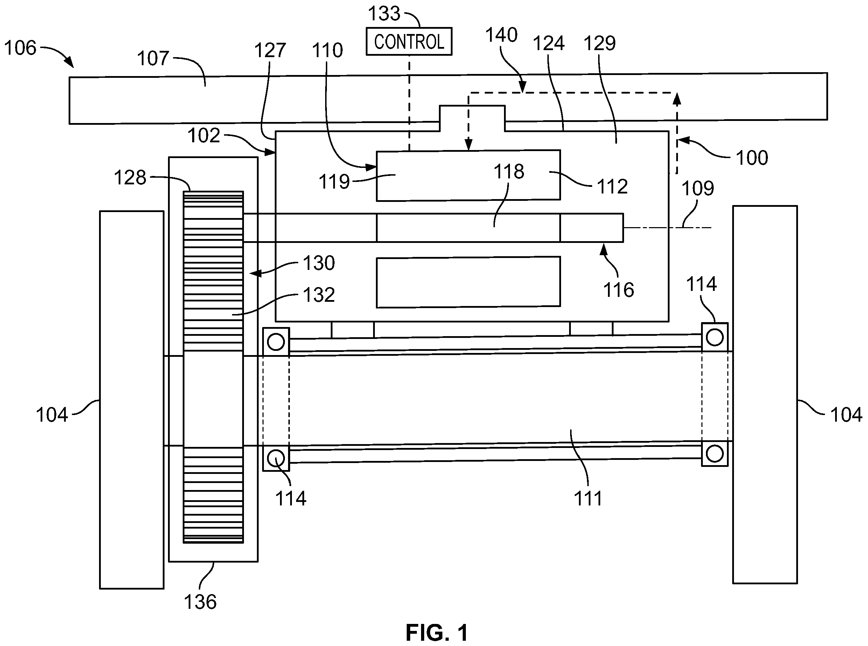

FIG. 1 is a schematic view of an e-machine system 100 according to example embodiments of the present disclosure. The e-machine system 100 may have a variety of configurations. In some embodiments, the e-machine system 100 may be configured as a traction drive system 102 that is included, for example, on a vehicle 106. Thus, the traction drive system 102 may be configured for driving one or more wheels 104 of the vehicle 106. More specifically, the wheels 104 may be included at opposite ends of an axle 111, and a chassis 107 may be supported on the wheels 104 by a suspension system (not shown). The vehicle 106 may be an electric car, truck, van, motorcycle, boat, or other vehicle. However, it will be appreciated that the e-machine system 100 may be configured otherwise without departing from the scope of the present disclosure.

Generally, the e-machine system 100 may include an e-machine 110, such as an electric motor 112. It will be appreciated that the e-machine 110 may be configured otherwise. The e-machine 110 may be configured as an electric generator in some embodiments. Furthermore, the e-machine 110 may be operable in some modes as a motor and in additional modes as a generator. The e-machine 110 may include a rotor member 118 and a stator member 119 that are housed within a cavity 129 of an e-machine housing 124.

The rotor member 118 may be supported on a shaft 116, and the shaft 116 may be supported for rotation about an axis 109 (i.e., rotation axis 109) within the e-machine housing 124. The stator member 119 of the e-machine 110 may be fixed within the e-machine housing 124 and may surround the rotor member 118 and the shaft 116. In embodiments in which the e-machine 110 is an electric motor 112, the shaft 116 may be referred to as an output shaft 116 of the electric motor 112. In some embodiments, a gear connection member 128 (e.g., a gear, a spline on the shaft 116, or other part with gear teeth features) may be operably supported on the shaft 116.

Also, the e-machine system 100 may include a transmission 130. The transmission 130 may generally include a geartrain 132 that is housed within a gearbox housing 136. The gearbox housing 136 may be attached (e.g., fixed) to a side wall 127 of the e-machine housing 124.

The geartrain 132 may be of any suitable type. The geartrain 132 may operatively connect the e-machine 110 and the axle 111 and may transmit power therebetween. The e-machine 110 may be coupled to the wheels 104 via the transmission 130. The geartrain 132 may be attached to the gear connection member 128 and to the axle 111. The gearbox housing 136 and the e-machine housing 124 may be moveably supported on the axle 111 by one or more bearings 114 (e.g., a bearing sleeve, suspension tube, etc.) such that the axle 111 may rotate relative thereto.

During operation, the electric motor 112 may rotatably drive the shaft 116 and the gear connection member 128 supported thereon. This rotational power may transfer to the geartrain 132, which may transmit the power to the axle 111 to rotate the wheels 104 and propel the vehicle 106. These operations may be controlled by a control system 133. The control system 133 may control speed of the motor 112 and/or other functions of the motor 112.

Furthermore, the e-machine system 100 may include a fluid coolant system 140. The fluid coolant system 140 may be configured for circulating a fluid, such as a liquid fluid coolant (e.g., coolant oil). The fluid coolant system 140 may be coupled to the stator member 119 as will be discussed. Accordingly, the fluid coolant system 140 and the stator member 119 may include features that provide cooling to the stator member 119. This may, in turn, provide cooling to the rotor member 118, to bearings, and/or to other adjacent areas of the e-machine 110.

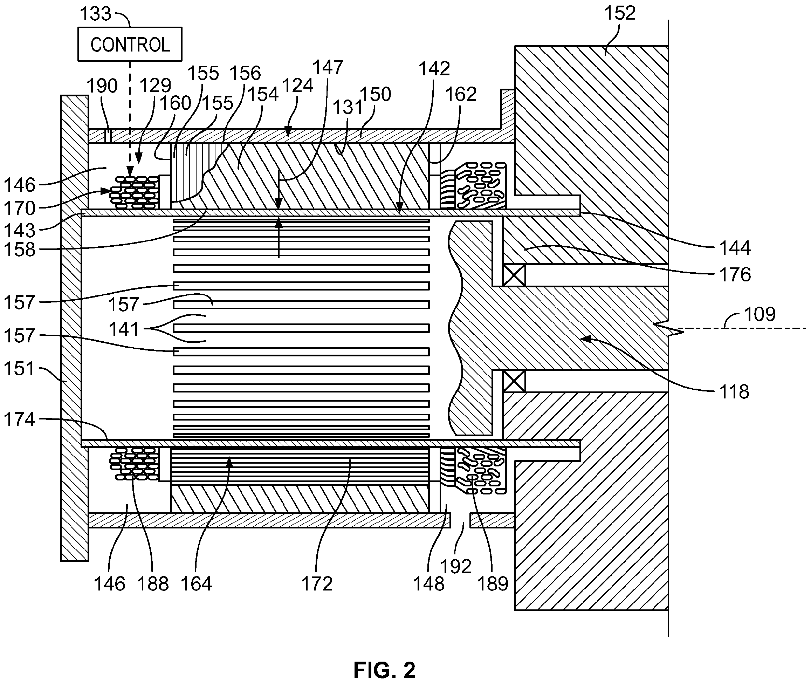

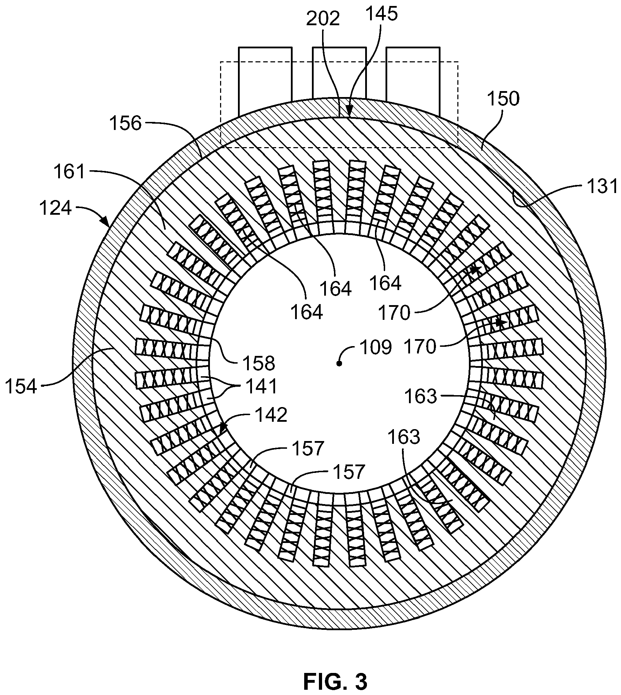

As represented in FIGS. 2 and 3, the e-machine housing 124 may be cylindrical and hollow. The e-machine housing 124 may include an outer radial wall 150, a first axial wall 151, and a second axial wall 152. The outer radial wall 150 may extend in a circumferential direction about the axis of rotation 109 and may extend longitudinally between the first axial wall 151 and the second axial wall 152. The outer radial wall 150 may also define an inner radial surface 131 that faces radially toward the axis 109. The first axial wall 151 and second axial wall 152 may be disc-like and may extend transverse to the axis 109. In some embodiments, the outer radial wall 150 may be integrally connected to either the first axial wall 151 or the second axial wall 152 in a one-piece, unitary outer housing, and the other of the first and second axial walls 151, 152 may be removably attached thereto. The outer radial wall 150, first axial wall 151, and second axial wall 152 may collectively define a stator cavity 129. The stator cavity 129 may be substantially cylindrical and may be centered on the axis 109. The stator cavity 129 may house the stator member 119 of the electric motor 112.

The stator member 119 may include a core 154 (i.e., stator core, etc.). The core 154 may be hollow and cylindrical so as to include an outer radial area 156, an inner radial area 158, a first axial end 160, and a second axial end 162. The core 154 may comprise a plurality of laminations 155 (two of which are indicated in FIG. 2). The laminations 155 may be formed from a metallic material in some embodiments. The core 154 may be stacked together and arranged along the axis 109 to collectively define the core 154 as will be discussed in greater detail below. The laminations 155 may provide manufacturing benefits, such as improved manufacturability, and/or the laminations 155 may provide improved electromagnetic performance.

The e-machine housing 124 may house the stator member 119 with the inner radial surface 131 of the outer radial wall 150 abutting against the outer radial area 156 of the stator core 154. In some embodiments, the outer radial area 156 of the stator member 119 may be press-fit, interference-fit, or friction-fit within the outer radial wall 150 of the e-machine housing 124.

As shown in FIG. 3, the core 154 may include a plurality of teeth 163 that radiate about the axis 109. The teeth 163 may extend inwardly radially from the outer radial area 156 of the core 154. The teeth 163 may include inner terminal ends 157 that may define at least part of the inner radial area 158 of the core 154.

Between neighboring pairs of the teeth 163, the core 154 may define slots 164 (i.e., grooves, passages, etc.). It will be appreciated that the laminations 155 of the core 154 may individually include notches that align along the axis 109 when the laminations 155 are stacked together, thereby collectively defining the slots 164. As shown in FIG. 3, the plurality of slots 164 may be disposed in spaced arrangement (e.g., equally spaced) about the axis of rotation 109 and may radiate from the axis of rotation 109. The slots 164 may have a rectangular cross section (FIG. 3) and may extend continuously from the first axial end 160 to the second axial end 162 (FIG. 2). Accordingly, the slots 164 may be open at the first axial end 160 and the second axial end 162 as shown in FIG. 2.

The stator member 119 may also include a radial seal member 142 (FIG. 3). The radial seal member 142 may be cylindrical, hollow, and substantially circular in cross-section (FIG. 3). The radial seal member 142 may be centered about the axis 109. The radial seal member 142 may include a first axial end 143 and a second axial end 144 that are spaced apart along the axis 109. The radial seal member 142 may have a relatively small wall thickness 147, which is measured radially between the inner and outer radial surfaces of the radial seal member 142. The radius of the radial seal member 142 may remain substantially constant along its length.

The radial seal member 142 may extend in a circumferential direction across the inner terminal ends 157 of the teeth 163. The radial seal member 142 may be attached to (e.g., layered over, encased over, covered over, and/or sealed to) the inner terminal ends 157 of the teeth 163 of the core 154. Also, intermediate portions 141 of the radial seal member 142 may extend between the neighboring inner terminal ends 157 of the teeth 163, thereby sealing off the respective slot 164 on the inner radial area 158 of the core 154. The radial seal member 142 may maintain a fluid seal sufficient to maintain a fluid flow through the slot 164, substantially in the axial direction along the axis 109. The radial seal member 142 may seal to the core 154 so as to inhibit fluid leakage directed radially from the slot 164. This fluid flow will be discussed in greater detail below.

As shown in FIGS. 2 and 3, the inner terminal ends 157 may be partially exposed from the surrounding portions of the radial seal member 142. Accordingly, the inner radial area 158 may include a smooth, flush, continuous surface cooperatively defined by both the inner terminal ends 157 and the radial seal member 142. As such, the stator member 119 may be disposed in very close proximity to the rotor member 118 (i.e., with a reduced circumferential gap therebetween) for increased e-machine performance and reduced losses.

In some embodiments, the radial seal member 142 may be formed of and/or include rigid and strong polymeric material. The material of the radial seal member 142 may be compatible with that of the core 154, for example, to allow for attachment via an extrusion process, a molding process, or other similar process. For example, while the core 154 may be formed substantially of metallic material, the radial seal member 142 may be formed of and/or include polymeric material. As such, the radial seal member 142 may be provided in a highly efficient and repeatable manufacturing method.

As shown in FIGS. 2 and 3, the stator member 119 may further include a plurality of windings 170 (i.e., winding members, wiring members, etc.). The windings 170 may be electrically conductive and may comprise a plurality of elongate segments. The windings 170 may be arranged in a plurality of coils, wraps, etc. that extend back-and-forth between first and second axial ends 160, 162 of the stator core 154 and between different ones of the slots 164.

In some embodiments, the windings 170 may include a plurality of longitudinal segments 172 (FIG. 2) that are received in the slots 164 of the stator core 154. The longitudinal segments 172 may extend generally along the axis 109 within respective slots 164 between the first axial end 160 and the second axial end 162 of the core 154. It will be appreciated that there may be any number of longitudinal segments 172 in the slots 164. The windings 170 may also include a plurality of first end members 188 that extend out from and back toward the first axial end 160 of the core 154. The windings 170 may further include a plurality of second end members 189 that extend out from and back toward the second axial end 162 of the core 154. The first end members 188 may electrically connect respective pairs of the longitudinal segments 172, and the second end members 189 may electrically connect pairs of the longitudinal segments 172 on the other axial end of the core 154. Also, there may be an electrical connector of a known type that electrically and operatively connects the windings 170 to the control system 133 for operation of the motor 112.

As shown in FIGS. 2 and 3, the first axial end 143 of the radial seal member 142 may project axially and outwardly from the first axial end 160 of the core 154. The first axial end 143 of the radial seal member 142 may also project axially away from the first end members 188 of the windings 170. The first axial end 143 may project axially from these other features of the stator member 119 to be supported by, attached to, and/or fixed to the e-machine housing 124. Likewise, the second axial end 144 may project axially and outwardly from the second axial end 162 and second end members 189. The second axial end 144 may be supported, attached, and/or fixed to the e-machine housing 124. The e-machine housing 124 may include a first interior support 174 that engages and supports the first axial end 143. The first interior support 174 may, in some embodiments, include a shoulder or groove that abuts and engages the axial end 143, including the axial rim and outer diameter surface thereof. The e-machine housing 124 may further include a second interior support 176 that engages and supports the second axial end 144. The second interior support 176 may, in some embodiments, include a tubular projection that is received in the second axial end 144 and that abuts the inner diameter surface thereof.

Also, a first flow chamber 146 may be defined axially between the first axial wall 151 and the first axial end 160 and may be defined radially between the radial seal member 142 and the outer radial wall 150. The first flow chamber 146 may be rounded and may extend circumferentially about the axis 109. Likewise, a second flow chamber 148 may be defined axially between the second axial wall 152 and the second axial end 162 and may be defined radially between the radial seal member 142 and the outer radial wall 150. The first end members 188 may be housed within the first flow chamber 146, and the second end members 189 may be housed within the second flow chamber 148. The second flow chamber 148 may be rounded and may extend circumferentially about the axis 109. The first flow chamber 146 may be fluidly connected to the slots 164. Also, the second flow chamber 148 may be fluidly connected to the slots 164.

The e-machine 110 may be operatively connected (i.e., fluidly connected) within the fluid coolant system 140. There may a pump for circulating liquid coolant through the e-machine 110 and directly over the windings 170 of the stator member 119. The e-machine 110 may include an inlet 190 (i.e., a fluid inlet) that is connected to the fluid coolant system 140 and that extends through the housing 124. In some embodiments, the inlet 190 may be directed normal to the axis 109 and into the first flow chamber 146. Also, the e-machine 110 may include an outlet 192 (i.e., a fluid outlet) that extends through the housing 124 and that is connected to the fluid coolant system 140. In some embodiments, the outlet 192 may be directed normal to the axis 109 and out from the second flow chamber 148.

Thus, the first flow chamber 146 may be referred to as an inlet manifold chamber that receives fluid coolant from the inlet 190 and distributes the fluid coolant to the plurality of slots 164. The coolant may flow along the slots 164 to cool the windings 170. The second flow chamber 148 may be referred to as an outlet manifold chamber that receives fluid coolant from the slots 164 and directs the coolant to the outlet 192.

It will be appreciated that the radial seal member 142 provides a useful and reliable seal for fluid flow through the slots 164. The radial seal member 142 may direct flow longitudinally along the slots 164 and may limit leakage toward the rotor member 118. The radial seal member 142 may also support the core 154 within the housing 124. The radial seal member 142 may be provided and, yet, the motor 112 may be compact and lightweight. Also, the radial seal member 142 may be provided using efficient manufacturing methods.

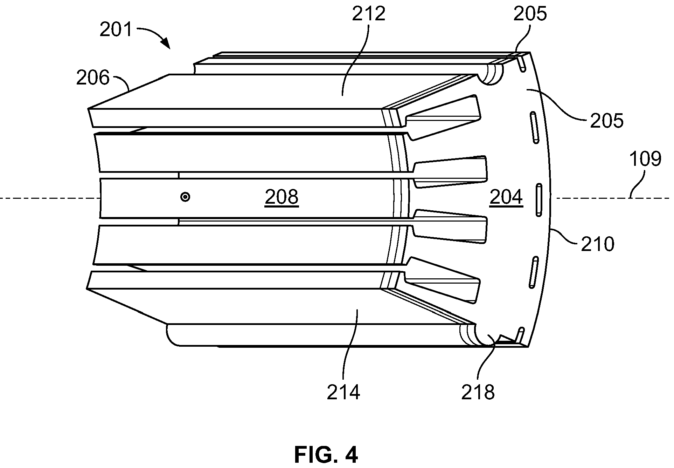

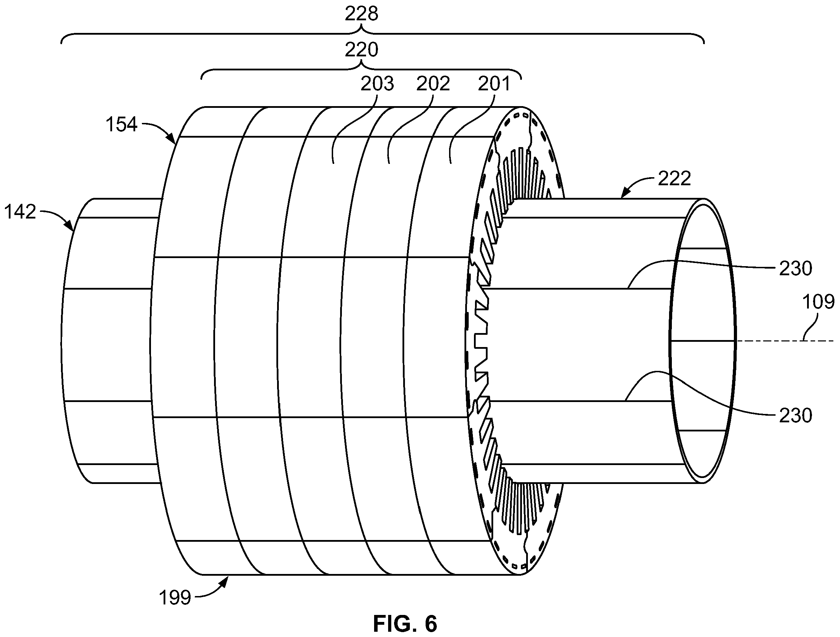

Referring now to FIGS. 4-6, additional details regarding the core 154 and the radial seal member 142 will be discussed according to example embodiments. As shown in FIG. 6, the core 154 may comprise and may be cooperatively defined by (e.g., assembled from) a plurality of core elements 199. There may be any number of core elements 199, and the core elements 199 may have a number of different configurations without departing from the scope of the present disclosure.

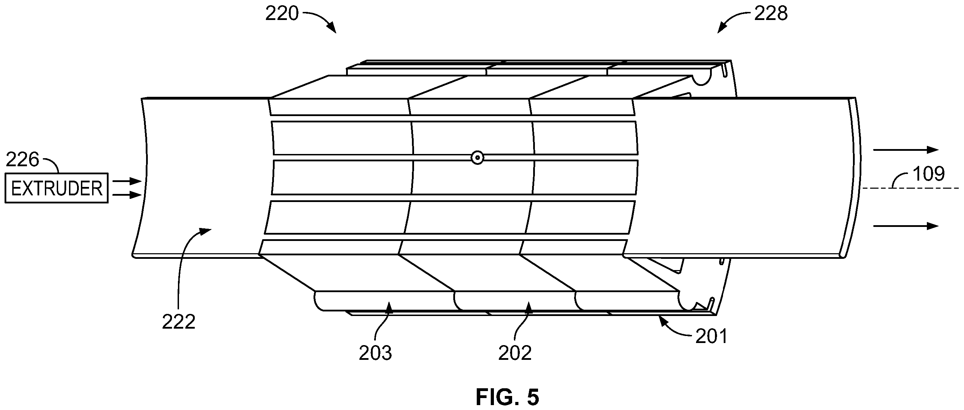

A first core element 201, a second core element 202, and a third core element 203 of the plurality of core elements 199 are individually identified in FIGS. 5 and 6 for purposes of discussion. The first, second, and third core elements 201, 202, 203 may be substantially identical in some embodiments and may be representative of the rest of the core elements 199. The first core element 201 of FIG. 4 will be discussed, and these features may be included on the other core elements 199.

As shown in FIG. 4, the first core element 201 may be a wedge-shaped block with a substantially flat first axial end 204, a substantially flat second axial end 206, a contoured inner radial face 208, and a contoured outer radial face 210. The inner and outer radial faces 208, 210 may arcuately contour about the longitudinal axis 109 with the inner radial face 208 facing the axis 109 and the outer radial face 210 facing away therefrom. Moreover, the first core element 201 may include a first circumferential face 212 and a second circumferential face 214 that face in opposite circumferential directions about the axis 109. In some embodiments, the core element 201 may be cooperatively defined by laminations, two of which are indicated at 205 in FIG. 4. The laminations 205 may be plates that are stacked along the axis 109. Individual laminations 205 may respectively define the first axial end 204 and the second axial end 206, and the laminations 205 may cooperatively define the inner and outer radial faces 208, 210 and the first and second circumferential faces 212, 214. The first circumferential face 212 may include a female engagement member 216, such as a groove that is recessed into the otherwise flat areas of the first circumferential face 212 and that extends along the axis 109 from the first axial end 204 to the second axial end 206. The second circumferential face 214 may include a male engagement member 218, such as a rounded rib or tongue that projects from the otherwise flat areas of the circumferential face 214 and that extends along the axis 109 from the first axial end 204 to the second axial end 206.

As shown in FIG. 5, the first, second, and third core elements 201, 202, 203 (as well as additional core elements 199 of FIG. 6) may be arranged together in a sealing arrangement 220. In some embodiments, the sealing arrangement 220 may include the core elements 199) stacked along the axis 109 with first axial ends 204 of some core elements 199 in close proximity and facing second axial ends 206 of other core elements 199. As shown in FIG. 6, there may be five core elements 199 in the sealing arrangement 220 of core elements 199.

Once in the sealing arrangement 220, the core elements 199 may be joined together by a segment 222 of the radial seal member 142. As shown in FIG. 5, the segment 222 may be formed by an extruder 226, which is represented schematically. The segment 222 may be formed and extruded along an extrusion direction, which is parallel to the axis 109. The segment 222 may be formed so as to seal and attach proximate the inner radial face 208. As a result, the segment 222 and core elements 199 may be attached and sealed together to define a sealed core portion 228 (FIG. 5). As shown in FIG. 6, a plurality of similar sealed core portions 228 may be joined together with the male engagement member 218 of one core portion 228 received in the female engagement member 216 of another core portion 228. The adjacent and adjacent core portions 228 may be joined at respective seams 230. In some embodiments, the seams 230 may be straight and parallel to the axis 109. The plurality of seams 230 may be spaced circumferentially about the axis 109 so as to define the core 154 and the radial seal member 142. In some embodiments, the seams 230 may be formed by abutting and joining edges of the segments 222, for example, via polymeric welding, adhesives, etc.

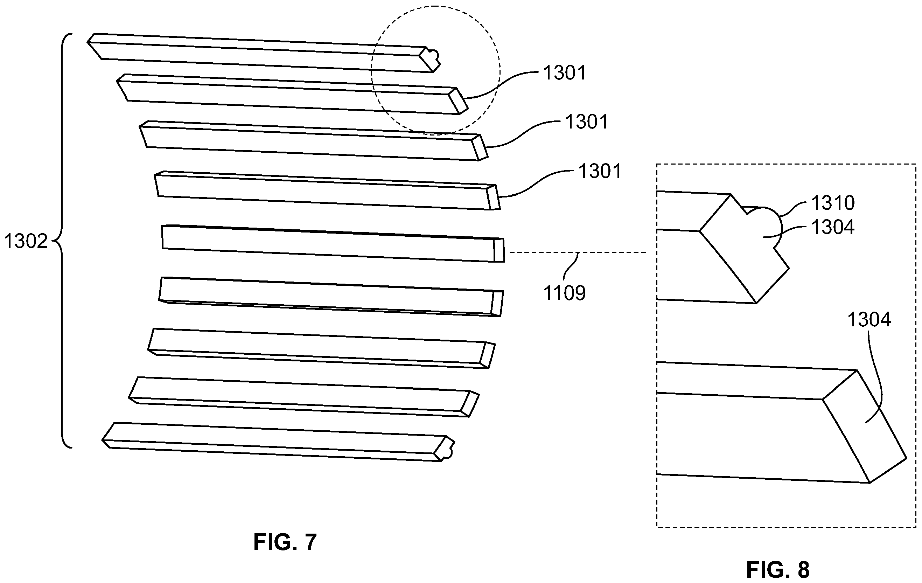

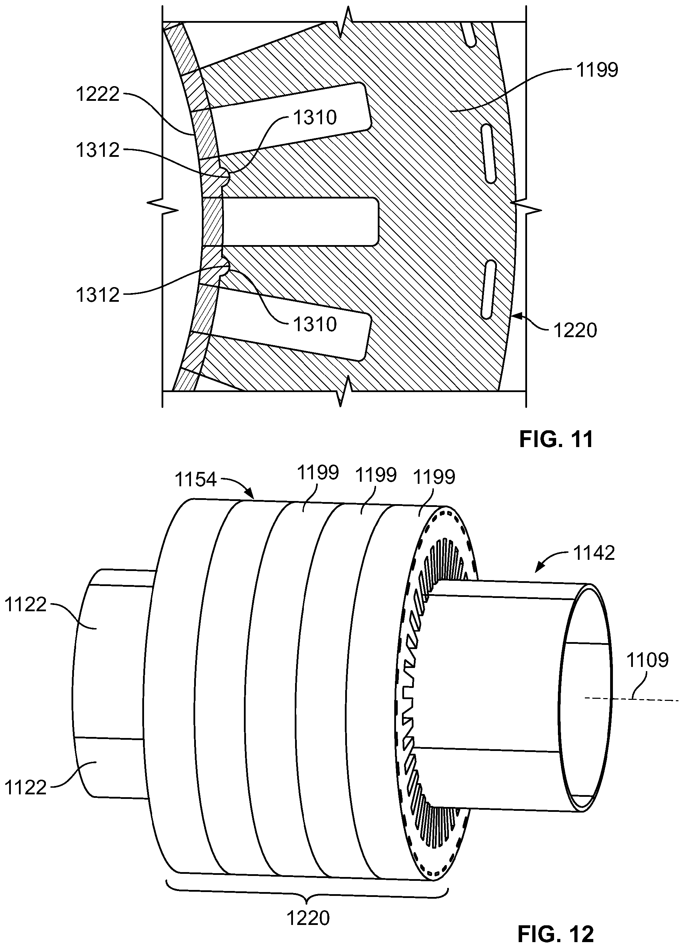

Referring now to FIGS. 7-12, additional details regarding the core 1154 and the radial seal member 1142 (FIG. 12) and manufacturing methods therefor will be discussed according to additional example embodiments. The core 1154 and radial seal member 1142 may include features discussed above with respect to FIGS. 1-6 and may include additional features that will be discussed. Features that correspond to those of FIGS. 1-6 are identified with corresponding reference numerals increased by 1000.

As shown in FIG. 7, a plurality of tooth members 1301 may be formed and arranged in an arrangement 1302. The tooth members 1301 may be elongate strips of metallic material. The tooth members 1301 may extend longitudinally along the axis 1109, and the tooth members 1301 may be spaced circumferentially about the axis 1109. As shown in FIG. 8, at least one of the tooth members 1301, such as a first tooth member 1306, may have a rectangular cross section (taken perpendicular to the axis 1109). Also, at least one other tooth member 1301, such as a second tooth member 1304, may include a tongue 1310 that projects outward radially therefrom.

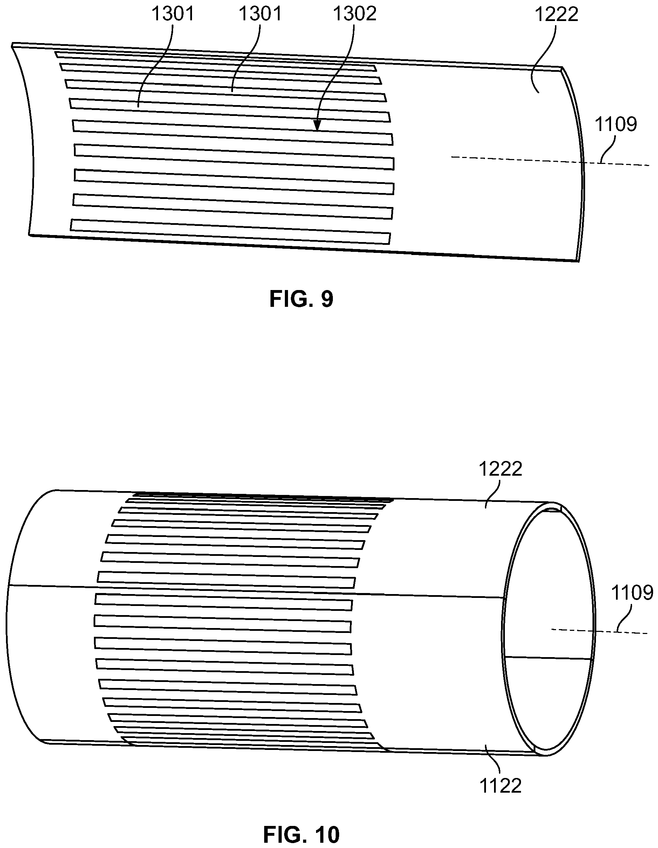

As shown in FIG. 9, the seal member segment 1222 may be provided, sealed, and attached to the arrangement 1302 of the tooth members 1301 (e.g., via extrusion or molding processes). Subsequently, as shown in FIG. 10, the segment 1222 may be attached to at least one other segment 1222 to extend about the axis 1109. Then, as shown in FIGS. 11 and 12, the plurality of core elements 1199 may be provided. In some embodiments, the core elements 1199 may be annular and may extend continuously about the axis 1109. The arrangement 1220 may include the core elements 1199 stacked along the axis 1109, and the arrangement 1220 may be advanced along the axis 1109 over the attached segments 1222. Specifically, as shown in FIG. 11, one or more of the tongues 1310 may be received in respective grooves 1312 of the core elements 1199, thereby limiting relative rotation between the arrangement 1220 of core elements 1199 and the segments 1222.

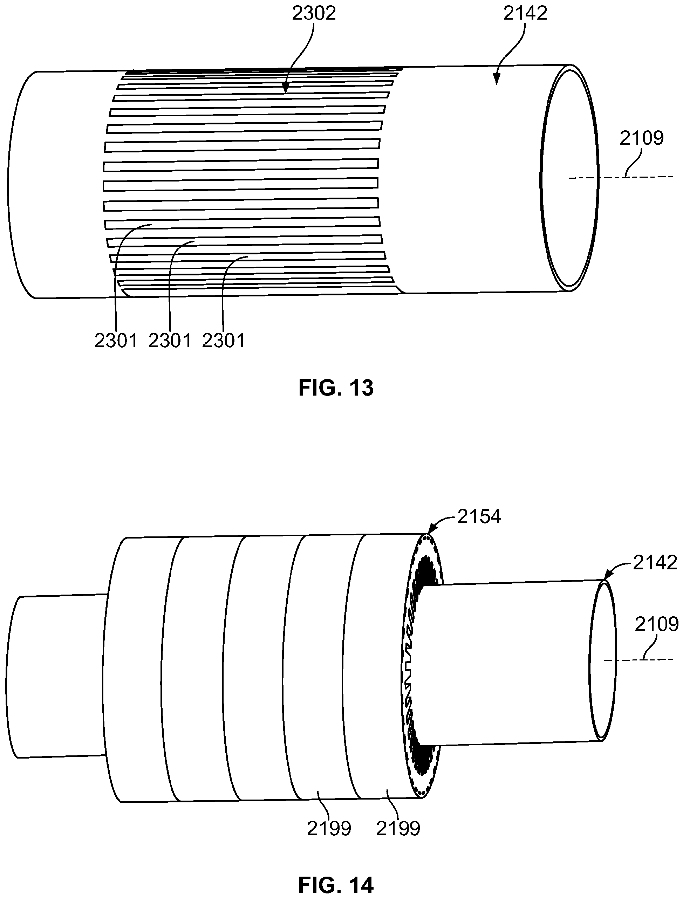

Referring now to FIGS. 13 and 14, additional details regarding the core 2154 and the radial seal member 2142 and manufacturing methods therefor will be discussed according to additional example embodiments. The core 2154 and radial seal member 2142 may include features discussed above with respect to FIGS. 1-12. Features that correspond to those of FIGS. 1-6 are identified with corresponding reference numerals increased by 2000, and features that correspond to those of FIGS. 7-12 are identified with corresponding reference numerals increased by 1000.

As shown in FIG. 13, the radial seal member 2142 may be attached, sealed, etc. to the arrangement 2302 of tooth members 2301. The radial seal member 2142 and arrangement 2302 may extend continuously and unitarily about the axis 2109. Subsequently, as shown in FIG. 14, the core elements 2199 may be provided, similar to the embodiments of FIG. 11.

Accordingly, the e-machine of the present disclosure may provide effective and efficient cooling. The radial seal member may be included for defining flow channels and for supporting the core. The coolant may flow along the stator windings within the slots to provide cooling thereto. Also, these features may be provided in a compact, lightweight package that is simple to manufacture and assemble.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing an exemplary embodiment of the disclosure. It is understood that various changes may be made in the function and arrangement of elements described in an exemplary embodiment without departing from the scope of the disclosure as set forth in the appended claims.

## Claims

1. An e-machine comprising:
a stator member having a longitudinal axis, the stator member including a first axial end and a second axial end that are spaced apart along the longitudinal axis, the stator member including a core that supports a plurality of windings, the core including an inner radial area that extends along the longitudinal axis between the first axial end and the second axial end, the core including a slot extending between the first axial end and the second axial end, the slot configured to receive a stator winding segment of the plurality of windings;
a radial seal member attached to the core, the radial seal member sealing off the slot on the inner radial area; and
a flow channel cooperatively defined by the radial seal member and the slot of the core, the flow channel configured to receive a flow of coolant for cooling the stator winding segment.

2. The e-machine of claim 1, wherein the radial seal member is cylindrical and hollow and includes a seal member first axial end that projects along the longitudinal axis from the first axial end of the core.

3. The e-machine of claim 2, wherein the radial seal member includes a seal member second axial end that projects along the longitudinal axis from the second axial end of the core.

4. The e-machine of any of claims 2 and 3, further comprising a housing that houses the stator member; and
wherein the housing, the seal member first axial end, and the first axial end of the core cooperatively define a flow chamber, the flow chamber fluidly connected to the slot.

5. The e-machine of any of claims 2-4, further comprising a housing that houses the stator member; and
wherein the housing includes an interior support that engages and supports the seal member first axial end.

6. The e-machine of any of the preceding claims, wherein the core is cooperatively defined by a plurality of core laminations that are stacked along the longitudinal axis.

7. The e-machine of any of the preceding claims, wherein the core is cooperatively defined by a plurality of core elements extending partially about the axis and arranged together about the axis.

8. The e-machine of any of the preceding claims, wherein the radial seal member is cooperatively defined by a plurality of seal member segments extending partially about the axis and arranged together about the axis.

9. The e-machine of any of the preceding claims, wherein the core includes a plurality of teeth;
further comprising a plurality of tooth members that are attached to the radial seal member; and
wherein at least one of the plurality of tooth members is engaged with a corresponding one of the plurality of teeth to limit rotation of the core relative to the radial seal member.

10. The e-machine of any of the preceding claims, wherein the at least one of the plurality of tooth members includes a projection that projects outward radially from the axis and the corresponding one of the plurality of teeth includes a recess that receives the projection to limit rotation of the core relative to the radial seal member.

11. A method of manufacturing the e-machine of any of the preceding claims comprising:
attaching at least part of the radial seal member to at least part of the core.

12. An e-machine system comprising the e-machine of any of the preceding claims, wherein the e-machine is an electric motor.

## Amended claims

### Amended claims in accordance with Rule 137(2) EPC.

1. An e-machine comprising:
a stator member (119) having a longitudinal axis (109), the stator member including a first axial end (160) and a second axial end (162) that are spaced apart along the longitudinal axis, the stator member including a core (1154) that supports a plurality of windings (170), the core including an inner radial area (158) that extends along the longitudinal axis between the first axial end and the second axial end, the core including a slot (164) extending between the first axial end and the second axial end, the slot configured to receive a stator winding segment (172) of the plurality of windings, the core comprising a plurality of teeth (163);
a radial seal member (1142) attached to the core, the radial seal member sealing off the slot on the inner radial area; and
a flow channel cooperatively defined by the radial seal member and the slot of the core, the flow channel configured to receive a flow of coolant for cooling the stator winding segment, wherein a plurality of elongate, metallic tooth members (1301) are attached to the radial seal member (1142), and wherein a projecting tongue (1310) of at least one of the plurality of tooth members is engaged with a groove (1312) of a corresponding one of the plurality of teeth to limit rotation of the core relative to the radial seal member.

2. The e-machine of claim 1, wherein the radial seal member is cylindrical and hollow and includes a seal member first axial end that projects along the longitudinal axis from the first axial end of the core.

3. The e-machine of claim 2, wherein the radial seal member includes a seal member second axial end that projects along the longitudinal axis from the second axial end of the core.

4. The e-machine of any of claims 2 and 3, further comprising a housing (124) that houses the stator member; and
wherein the housing, the seal member first axial end, and the first axial end of the core cooperatively define a flow chamber (146), the flow chamber fluidly connected to the slot.

5. The e-machine of any of claims 2-4, further comprising a housing (124) that houses the stator member; and
wherein the housing includes an interior support (174) that engages and supports the seal member first axial end.

6. The e-machine of any of the preceding claims, wherein the core is cooperatively defined by a plurality of core laminations that are stacked along the longitudinal axis.

7. The e-machine of any of the preceding claims, wherein the core is cooperatively defined by a plurality of core elements (199) extending partially about the axis and arranged together about the axis.

8. The e-machine of any of the preceding claims, wherein the radial seal member is cooperatively defined by a plurality of seal member segments extending partially about the axis and arranged together about the axis.

9. The e-machine of any of the preceding claims, wherein the projecting tongue (1310) projects outward radially from the axis.

10. A method of manufacturing the e-machine of any of the preceding claims comprising:
attaching at least part of the radial seal member to at least part of the core.

11. An e-machine system comprising the e-machine of any of Claims 1 to 9, wherein the e-machine is an electric motor.
